# NEW EUROPEAN PATENT SPECIFICATION

(11) **EP 0 561 069 B2**
(45) Date of publication and mention of the opposition decision: **05.04.2000**
(45) Mention of the grant of the patent: 19.06.1996
(21) Application number: 92302342.8
(22) Date of filing: 18.03.1992
(51) Int. Cl.: H01M 10/14, B65G 57/11

(54) **Method of stacking and transferring lead storage battery plates and apparatus.**
Verfahren und Vorrichtung zum Stapeln und Transportieren von Bleiakkumulatorplatten.
Méthode pour l'empilement et le transfert des plaques pour accumulateurs au plomb et dispositif

(43) Date of publication of application: 22.09.1993
(73) Proprietor: MATSUSHITA ELECTRIC INDUSTRIAL CO., LTD., Kadoma-shi, Osaka-fu, 571 (JP)
(72) Inventor: Kobayashi, Masaru, Toyohashi-shi (JP); Kawakami, Kiyohiko, Kosai-shi (JP); Suzuki, Kunihiro, Iwata-gun, Shizuoka-ken (JP); Takahashi, Katsuhiro, Toyohashi-shi (JP); Yamamoto, Kenzo, Toyohashi-shi (JP)
(74) Representative: Wilson, Peter

(56) References cited:
- EP-A- 0 327 208
- EP-A- 0 402 349
- EP-A- 0 402 350
- EP-B1- 0 529 708
- DE-A- 2 705 509
- US-A- 4 934 687

## Description

The present invention relates to a method of stacking and transferring plates for a lead storage battery, and an apparatus for use in the method.

Plates for a lead storage battery are generally produced by the pasting method. In a well-known type of pasting method, a paste-like active material is applied onto a cast grid, the surface of the grid is flash-dried, and a plurality of such grids are stacked and dried by ageing in the ageing room. Recently, there has been much progress in enhancing productivity of such pasted plates. The productivity of the pasted plates has been greatly improved with development of the expanding method in which a continuously reticulated frame is formed from a continuous sheet of a lead alloy by expanding, paste is continuously applied to the frame, and the frame is cut into plates and flashdried, and the continuous casting method in which paste is applied to a continuously cast grid. However, on the other hand, handling of plates which are produced at high speed leaves much room for improvement. Actually, the plates are separated after pasting and flash drying, gathered by hand at the end of a conveyor, and arranged on a pallet. A manual operation such as this is inefficient, and degradation due to damage and dropping of the plates and accidents resulting in injury or death are likely. Thus, the benefit of the improvement in the processes previous to the manual operation is spoiled. Mechanisation is delayed because a plate before ageing is soft and apt to be transformed even if it is flash-dried, and particularly, the right and left cut ends of an expanded plate are likely to collapse due to its structure.

Conventionally, when such plates, which are hard to handle, are mechanically stacked and transferred, the plates transported by a belt conveyor are sucked up from above by a rotating belt with a sucker, released from the sucker and dropped in a predetermined position. In this method, however, a stable operation state is not always obtained because of errors in suction and release. As a result, as the transport speed of the plates is increased, the drop position of the plates becomes unstable. Furthermore, damage to the plates and failure of the plate stacking and transferring apparatus frequently occur.

European patent specification EP-A-0402349 describes a plate stacking apparatus. This comprises a conveyor for continuously transporting a plurality of plates and a plate ejecting means consisting of a pair of rollers disposed at a forward end of the conveyor. Plates ejected from the conveyor are formed in stacks on another conveyor (stacker table). This other conveyor is disposed below a drop line of the plates ejected from the ejecting means and has associated therewith a stop plate which can be controlled to move from a position below the other conveyor to a position at the level of said conveyor to catch plates being ejected from the ejecting means and thus form stacks of plates on said conveyor.

European patent specification EP-A-0402350 also describes a plate stacking apparatus. This comprises a pair of conveyors for continuously transporting plates. Plates are removed alternately from the two conveyors by a plate suction means and placed on a stacker table which descends in accordance with the number of plates stacked thereon. The stacker table descends to deposit stacks of plates on a lower conveyor. While a stack of plates is being transferred to the lower conveyor, removal of plates from the two conveyors for stacking on the stacker table must be halted until the transfer of the stack of plates is completed.

An object of the present invention is to achieve stable mechanisation for stacking and transferring pasted plates which are hard to handle, to rationalise operations in accordance with the recently improved production speed of the plates, and to ensure the quality of products.

In order to achieve the above object, a first aspect of the present invention provides a plate stacking apparatus comprising: a belt conveyor for continuously transporting a plurality of pasted plates; means disposed at a leading end of said conveyor for ejecting said plates from said conveyor to drop onto a first stacker table of a stacking device to form a stack of plates thereon, characterised in that the first stacker table descends in accordance with the number of plates stacked thereon and said first stacker table can occupy a stand-by position (A) above or beside a drop line of the plates, wherein said table can move from the stand-by position (A) to a position (B) below the drop line of the plates within a time interval between plate ejections to enable plates to be stacked thereon.

A second aspect of the present invention provides a method of stacking pasted plates being continuously transported by a belt conveyor and ejected from said conveyor by an ejecting means disposed at a leading end of said conveyor, said plates dropping onto a first stacker table of a stacking device to form a stack of plates thereon, characterised in that it comprises the steps of controlling the stacker table to descend in accordance with the number of plates stacked thereon, and when said stacker table is occupying a stand-by position (A) above or beside a drop line of the plates, controlling said table to move to a position (B) below the drop line of the plates within a time interval between plate ejections to enable plates to be stacked thereon.

The effects and operations of the above elements of the invention will now be explained.

First, the eject angle adjusting device for a plate is located at the end of the conveyor on which the plates are transported at high speed, and may be formed in various shapes. The adjusting device determines the flying distance and the landing posture of the plates, and, unlike the conventional suction method, makes no landing error. For example, the objective of the adjusting device is achieved by setting the drop angle of the plate and preferably a frictional resistance by using a shooter. Furthermore, a method of adjusting the eject angle of a plate by utilising the engagement of a pair of rollers is effective, and thereby the plate can be accurately dropped and landed in a correct posture at a predetermined position. It is preferable that the speed of the plate in the direction of the drop line be decreased, and thereby it is unlikely that the plate will collide with a wall or the like and be damaged.

The stacker table has a mechanism which descends while catching and stacking plates near the drop point of the plates. In order to continue stacking plates after stacking a predetermine number of plates, it is necessary to replace the stacker table with another one, which stands by above or beside the plate drop point, during the high-speed drop of the plate (1 shot). A mechanism for making the above stacker table stand by above the plate drop line is easily operated by an operation of descending the stacker table from above to below the drop line regardless of the area of the plate. Even if the descending precision varies, as long as the stacker table moves below the dropping plate, no error arises in catching the plate. Thereby, the replacement of the stacker table is facilitated however quickly the plates to be stacked are dropped.

If the stacking of plates is continued by using two stacker tables, while a first stacker table is stacking plates, a second stacker table receives the stacked plate and descends. Then, while the stacked plates are moved from the second table to another transfer mechanism, the first stacker table is returned to the aforementioned predetermined position to stand by. It is thereby possible to lastingly and safely continue the stacking of plates.

Although such a method of dropping and landing plates can precisely stack the plates in the same position, the position is sometimes shifted. Therefore, it is important to jog the four sides of the plates to meet the ageing condition for the plates. A collision wall disposed on the drop line of the plate contributes toward positioning the plates in the direction of the depth thereof. However, since the stacked transformable plates are hard to move, a jogging machine sequentially pushes a plurality of times on the right and left sides of the plates which are being stacked. Since the jogging machine makes it unnecessary to make the stacker table narrow, errors in stacking plates are reduced and the jogging of the plates is simplified. Thus, stacks of plates are transferred to the next transport line one by one. However, it is necessary in consideration of space efficiency to collectively handle many stacks of plates in the next ageing process, for example, to lay the stacks of plates on one flat plate so as to transport the stacks together. By fitting stays for supporting the stacks of plates into holes of the flat plate, laying stacks of plates on the stays by a moving means, for example, a fork, and lifting the flat plate above the stays, the soft stacks of plates can be gathered on the flat plate without being damaged.

After ageing, the stacks of plates can be laid on the stays by an operation opposite to the above operation so that the stacks of plates are separately handled.

The above element mechanisms are individually effective in handling pasted plates which are likely to be damaged, and a combination of the mechanisms functions as a high-speed plate stacking and transferring apparatus which is well-balanced.

The features of the invention will be better understood from the following description of an embodiment with reference to the drawings, of which:-
Fig. 1 is a view of a plate eject angle adjusting device according to the present invention;
Fig. 2 is an explanatory view of a standby take-over mechanism for a stacker table according to the present invention;
Fig. 3 is an explanatory view of a jogging mechanism for stacked plates according to the present invention;
Fig. 4A is an explanatory view of a mechanism for transferring plates and placing a stacker table on standby while continuing stacking plates;
Fig. 4B is a view showing a mechanism for transferring stacked plates to another stacker table while stacking plates;
Fig. 4C is a view showing a device for transferring stacks of plates to a conveyor which transports the stacks; and
Fig. 5 is a view of a mechanism for transferring a plurality of stacks of plates together from the single transport conveyor onto a flat plate and returning the stacks to the single transport conveyor.

The features and effective construction of the present invention will now be described with reference to an embodiment.

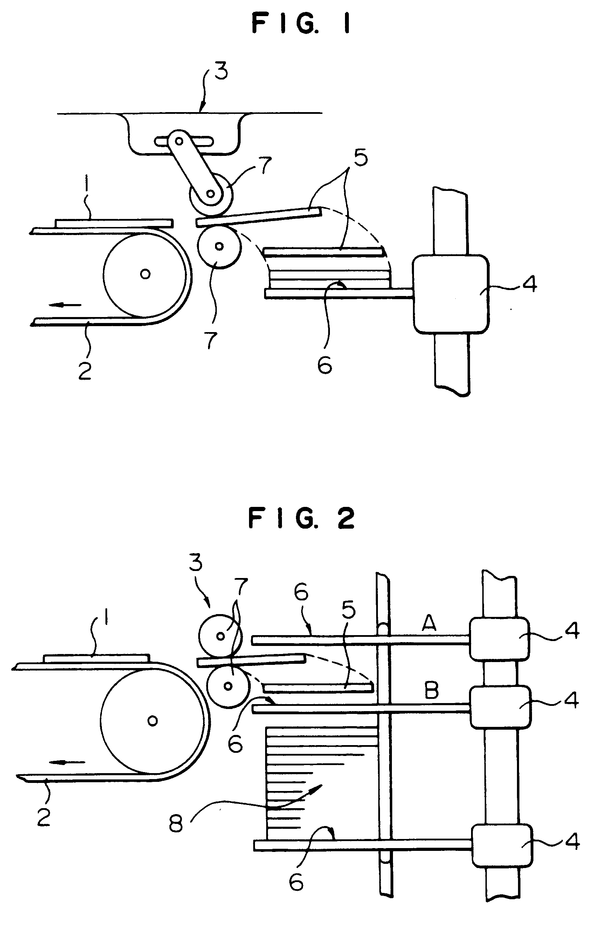

Fig. 1 illustrates a plate eject angle adjusting device which is at the point of a plate stacking and transferring apparatus of the present invention. Referring to Fig. 1, reference numerals 1, 2 and 3 denote a plate, a high-speed belt conveyor for transporting the plate 1 and a plate eject adjusting device, respectively. A stacker table 4 stacks plates 5, which drop from the end of the conveyor 2, on a stacking plate 6 thereof, and descends in accordance with the number of stacked plates 5. In this embodiment, the eject angle adjusting device 3 comprises a pair of (upper and lower) rollers 7, and can easily change the eject angle of the plates 5 by moving the position of one of the rollers 7 frontwards and rearwards. Furthermore, if necessary, a rotating force in the plate eject direction may be applied to one or both of the rollers 7.

Fig. 2 shows a standby take-over mechanism of the stacker table of the plate stacking and transferring apparatus according to the present invention. The stacking plate 6 of the stacker table 4 stands by in position A above the drop line of the plate 5. When a predetermined stack of plates 8 is formed on a stacking plate 6 of another stacker table disposed below the stacker table 4, the stacking plate 6 of the stacker table 4 comes down to position B where the plate 5 lands thus switching the stacker tables. Although the stacking plate may instead be pushed out from its side, the method in this embodiment is more effective in reducing errors in catching plates.

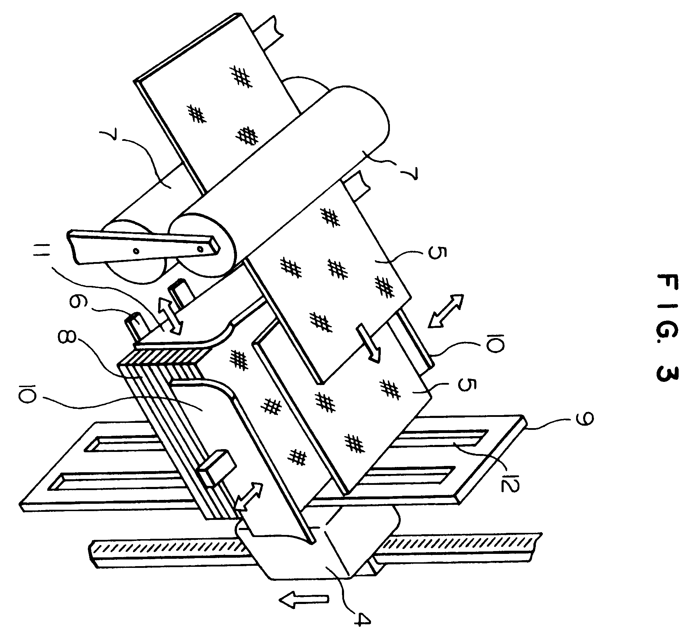

Fig. 3 shows a plate jogging mechanism in the plate stacking and transferring apparatus of the present invention. A collision wall 9 is located on the extension of the drop line of the plate 5 so as to prevent the plate 5 from being projected outwards. The collision wall 9 is in contact with one side of the stack of plates 8 and serves as a guide and a jogging jig while the stacking plate 6 is descending. Jogging devices 10 and a jogging device 11 push the plates 5 a plurality of times from the right and left sides and from the front, respectively.

It is preferable that the upper portions of the right and left jogging devices 10 spread outwardly so as to substantially widen the drop area of the stacking plate 6 for the plates 5.

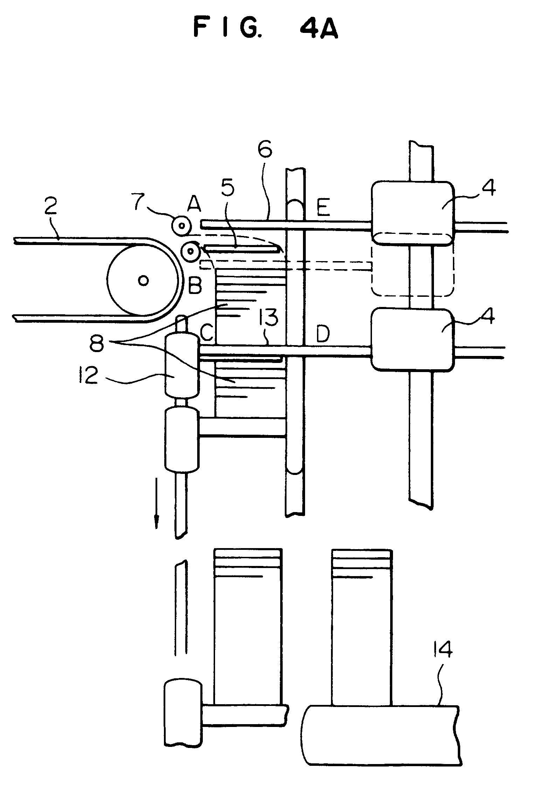

In order to continuously stack plates, it is necessary to transfer the stack of plates 8 on the stacker table 4. A second stacker table, which is different from the stacker table shown in Fig. 2, stands by on the same vertical line, and the stack of plates 8 is transferred onto the second stacker table while the stacking of plates is being continued. It is necessary for the stacking of plates to be taken over from the second stacker table sometime and it is necessary to make time for moving the first stacker table 4 to a first standby position without stopping the stacking. Fig. 4A shows a mechanism for taking over the stacking of plates.

A stacking plate 6 of the first stacker table 4 on standby in position A instantaneously descends to position B indicated by a broken line during one shot of a plate, and starts stacking of plates. While continuing the stacking, the stacking plate 6 further descends to position C. Then, a second stacker table 12 and a foam support of the stacker table 4 engage with each other and transfer a stack of plates 8 to the second stacker table 12. The stacker table 4 retracts its stacking plate 6 to position D, moves to the upper position E, projects its stacking plate 6 to the front position A in position E, and stands by for the next stacking operation. Meanwhile, since the second stacker table 12 which received the stack of plates 8 in position C is positioned on the same vertical line as the first stacker table 4, it descends while stacking plates thereon in the same manner as the first stacker table 4, and, when the stacking is taken over by the first stacker table 4 which stands by above as described before, slowly transfers the stack of plates 8 to a transfer line 14 disposed below. Fig. 4B shows a mechanism for transferring the stack of plates 8 from the stacking plate 6 of the first stacker table 4 to a stacking plate 13 of the second stacker table 12 while continuing the stacking of plates. Fig. 4C shows a mechanism for receiving the stack of plates 8 (not shown) on a U-shaped third stacker table 13a which engages a slit of the stacking plate 13 of the second stacker table 12, and transfers the stack of plates 8 to a conveyor 14 which transports the stack 8.

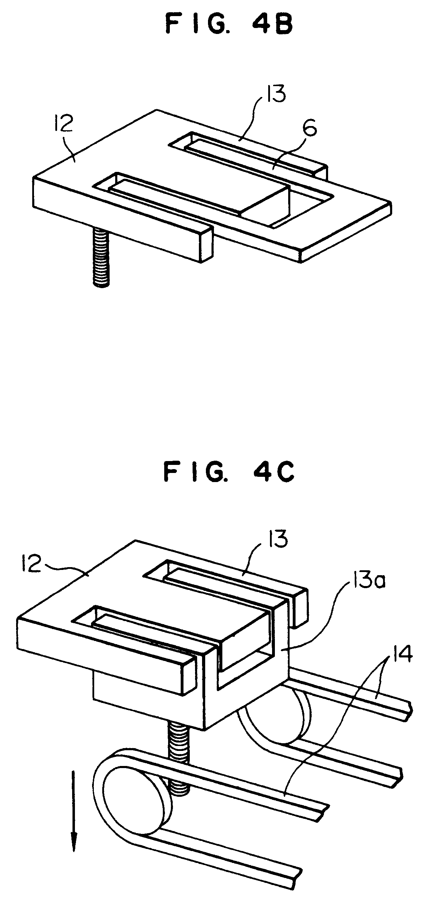

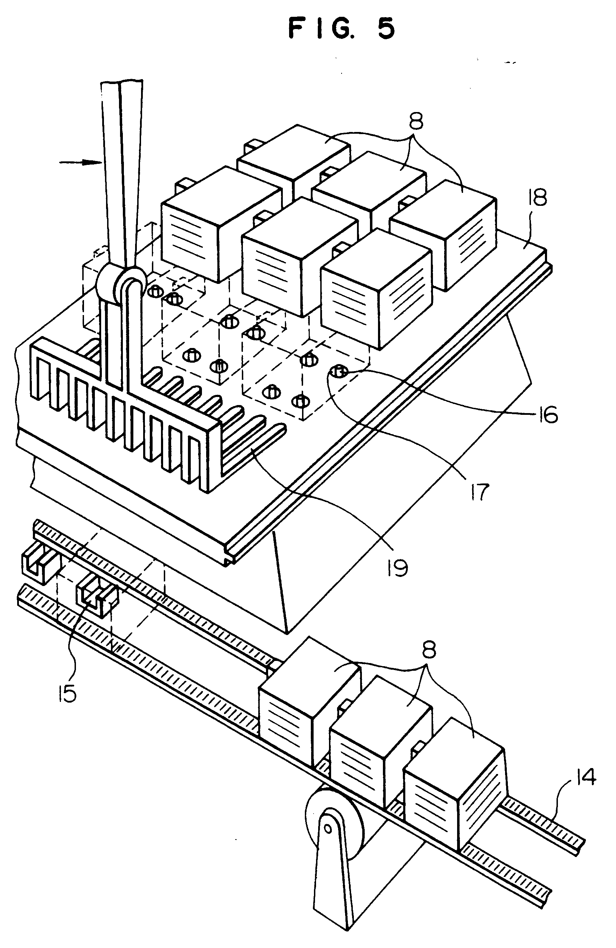

Fig. 5 illustrates a transferring mechanism for transferring a plurality of stacks of plates 8 altogether from the conveyor 14 onto a flat plate 18. Basically, the transferring mechanism is composed of a plurality of groups of stays 16 for laying the stacks of plates 8 on the top thereof, and the flat plate 18 having a plurality of holes 17 for fitting the stays 16 therein and vertically movable about the stays 16 fitted in the holes 17. The stacks of plates 8 are lifted from the conveyor 14 by a push-up tool 15, and transferred on the stays 16, which project through the holes 17 of the flat plate 18, by a fork 19 serving as a transfer means. Subsequently, the flat plate 18 is raised above the stays 16 and the plurality of stacks of plates 8 are collectively transferred onto the flat plate 18.

In order to switch the collective handling of the stacks of plates on the flat plate to individual handling, it is only necessary to perform an operation opposite to the above operation.

As described above, the elements of the mechanisms of the apparatus of the present invention independently improve the stacking and transferring processes of plates, and the combination of the elements of the mechanisms enables well-balanced handling of plates according to high-speed production of plates. Thus, the mechanism is of great industrial value for the enhancement of plate productivity.

## Claims

1. A pate stacking apparatus comprising:
a belt conveyor (2) for continuously transporting a plurality of pasted plates (1,5); means disposed at a leading end of said conveyor (2) for ejecting said plates (1,5) from said conveyor (2) to drop onto a first stacker table (4) of a stacking device to form a stack of plates (8) thereon, characterized in that the first stacker table (4) descends in accordance with the number of plates (1,5) stacked thereon and said first stacker table (4) can occupy a stand-by position (A) above or beside a drop line of the plates (1,5), wherein said table (4) can move from the stand-by position (A) to a position (B) below the drop line of the plates (1,5) within a time interval between place ejections to enable plates (1,5) to be stacked thereon.

2. A plate stacking apparatus as claimed in claim 1, characterised in that the stacking device includes a second stacker table (12) disposed below said first stacker table (4), wherein plates (1,5) ejected by the plate ejecting means (3) from the conveyor (2) drop onto said second stacker table (12) until the first stacker table moves from the stand-by position (A) to the position (B) below the drop line of the plates (1,5) to enable places (1,5) to be stacked thereon.

3. A plate stacking apparatus as claimed in claim 2, characterised in that after the first stacker table (4) has moved to the position (B) below the drop line of the plates (1,5), it descends to a lower position (C) while plates (1,5) continue to be stacked thereon and at said lower position (C) plates (1,5) stacked on the first table (4) are transferred to the second table (12).

4. A plate stacking apparatus as claimed in claim 3, characterised in that while plates (1,5) are being stacked on the first stacker table (4), the second stacker table (12) upon which a stack of places (8) has been formed descends to the position of a transfer conveyor line (14) in order to transfer said stack of plates (8) onto said line (14).

5. A plate stacking apparatus as claimed in claim 3 or claim 4, characterised in that a stacking plate (6) of the first stacker table (4) is retracted to a position (D) away from the descending path of plates (1,5) stacked on the second stacker table (12) when said first stacker table (4) is at the lower position (C) and plates (1,5) stacked thereon have been transferred to the second stacker table (12).

6. A plate stacking apparatus as claimed in claim 5, characterised in that the first stacker table (4) with is stacking plate retracted ascends to a position (E) at which the stacking plate (6) is projected to occupy the stand-by position (A).

7. A plate stacking apparatus as claimed in any preceding claim, characterised in that said plate ejecting means (3) has a device for adjusting the ejection angle of said plates (1,5).

8. A plate stacking apparatus as claimed in claim 7, characterised in that said plate eject angle adjusting device comprises an upper roller (7) and a lower roller (7) for rotating and taking said plate (1,5) in a gap therebetween in order to eject said plate (1,5).

9. A plate stacking apparatus as claimed in claim 8, characterised in that at least one of the rollers (7) is given a driving force.

10. A place stacking apparatus as claimed in claim 8 or claim 9, characterised in that the position of one of said rollers (7) can be varied in a forward and rearward direction relative to the drop line of the plates.

11. A plate stacking apparatus as claimed in any preceding claim, characterised in that it includes a collision wall (9) provided separately from the first stacker table (4) and in the drop line of the plates (1,5) ejected from the plate ejecting means (3) so as to prevent plates (1,5) projecting outwardly.

12. A plate stacking apparatus as claimed in claim 11, characterised in that said collision wall (9) is formed at least from above to below the drop line of said plates (1,5) ejected from said plate ejecting means (3) and said collision wall (9) is in continuous contact with one side of a stack of plates (8) formed on the first stacker table (4).

13. A plate stacking apparatus as claimed in claim 12, characterised in that it further comprises jogging means (10,11) for jogging said stacked plates (1,5) by repeatedly pushing at least a part of at least one side of said stack of plates (8) in the horizontal direction.

14. A plate stacking apparatus as claimed in claim 13, characterised in that upper portions of devices (10) comprising said jogging means (10,11) are spread outwardly with respect to said first stacker table (4).

15. A method of stacking pasted plates being continuously transported by a belt conveyor (2) and ejected from said conveyor (2) by an ejecting means (3) disposed at a leading end of said conveyor (2), said plates dropping onto a first stacker cable (4) of a stacking device to form a stack of plates (8) thereon, characterized in that it comprises the steps of controlling the stacker table (4) to descend in accordance with the number of plates (1,5) stacked thereon, and when said stacker table (4) is occupying a stand-by position (A) above or beside a drop line of the plates (1,3), controlling said table (4) to move to a position (B) below the drop line of the plates (1,5) within a time interval between plate ejections to enable plates (1,5) to be stacked thereon.

16. A method as claimed in claim 15, characterized in that the stacking device includes a second stacker table (12) disposed below said first stacker table (4), wherein plates (1,5) ejected by the plate ejecting means (3) from the conveyor (2) drop onto said second stacker table (12) until the first stacker table is controlled to move from the stand-by position (A) to the position (B) below the drop line of the plates (1,5) to enable plates (1,5) to be stacked thereon.

17. A method as claimed in claim 16, characterized in that after the first stacker table (4) has moved to the position (B) below the drop line of the plates (1,5), it is controlled to descend to a lower position (C) while plates (1,5) continue to be stacked thereon and at said lower position (C) plates (1,5) stacked on the first table (4) are transferred to the second table (12).

18. A method as claimed in claim 17, characterised in that while plates (1,5) are being stacked on the first stacker table (4), the second stacker table (12) upon which a stack of plates (8) has been formed is controlled to descend to the position of a transfer conveyor line (14) in order to transfer said stack of plates (8) onto said line (14).

19. A method as claimed in claim 17 or claim 18, characterised in that a stacking plate (6) of the first stacker table (4) is retracted to a position (D) away from the descending path of plates (1,5) stacked on the second stacker table (12) when said first stacker table (4) is at the lower position (C), and plates (1,5) stacked thereon have been transferred to the second stacker table (12).

20. A method as claimed in claim 18, characterised in that the first stacker table (4) with its stacking plate retracted is controlled to ascend to a position (E) at which the stacking plate (6) is projected to occupy the stand-by position (A).

## Patentansprüche

1. Vorrichtung zum Stapeln von Platten, umfassend: einen Bandförderer (2) zum kontinuierlichen Transportieren einer Vielzahl von pastierten Platten (1, 5); an einem vorderen Ende des Förderers (2) angeordnete Mittel zum Abwerfen der Platten (1, 5) von dem Förderer (2), damit sie auf einen ersten Stapeltisch (4) einer Stapeleinrichtung fallen, um darauf einen Plattenstapel (8) zu bilden, dadurch **gekennzeichnet**, daß sich der erste Stapeltisch (4) entsprechend der Anzahl der darauf gestapelten Platten (1, 5) nach unten bewegt und daß der erste Stapeltisch (4) eine Bereitschaftsstellung (A) über oder neben einer Fallinie der Platten (1, 5) einnehmen kann, wobei sich dieser Tisch (4) in einem Zeitintervall zwischen dem Abwerfen der Platten von der Bereitschaftsstellung (A) in eine Stellung (B) unter der Fallinie der Platten (1, 5) bewegen kann, um Platten (1, 5) darauf stapeln zu können.

2. Vorrichtung zum Stapeln von Platten nach Anspruch 1, dadurch **gekennzeichnet**, daß die Stapeleinrichtung einen zweiten Stapeltisch (12) umfaßt, der unter dem ersten Stapeltisch (4) angeordnet ist, wobei die von den Plattenabwerfmitteln (3) von dem Förderer (2) abgeworfenen Platten (1, 5) auf den zweiten Stapeltisch (12) fallen, bis sich der erste Stapeltisch von der Bereitschaftsstellung (A) in die Stellung (B) unter der Falllinie der Platten (1, 5) bewegt, um Platten (1, 5) darauf stapeln zu können.

3. Vorrichtung zum Stapeln von Platten nach Anspruch 2, dadurch **gekennzeichnet**, daß sich der erste Stapeltisch (4), nachdem er sich in die Stellung (B) unter der Fallinie der Platten (1, 5) bewegt hat, in eine untere Stellung (C) bewegt, während Platten (1, 5) weiterhin auf diesem gestapelt werden, und daß die auf dem ersten Stapeltisch (4) gestapelten Platten (1, 5) in der unteren Stellung (C) auf den zweiten Stapeltisch (12) überführt werden.

4. Vorrichtung zum Stapeln von Platten nach Anspruch 3, dadurch **gekennzeichnet**, daß während des Stapelns von Platten (1, 5) auf dem ersten Stapeltisch (4) der zweite Stapeltisch (12), auf dem ein Plattenstapel (8) gebildet wurde, sich zum Ort eines Überführungsförderers (14) nach unten bewegt, um diesen Plattenstapel (8) auf diesen Förderer (14) zu überführen.

5. Vorrichtung zum Stapeln von Platten nach Anspruch 3 oder 4, dadurch **gekennzeichnet**, daß eine Stapelplatte (6) des ersten Stapeltisches (4) von der Abwärtsbahn der auf dem zweiten Stapeltisch (12) gestapelten Platten (1, 5) in eine Stellung (D) Zurückgezogen wird, wenn sich der erste Stapeltisch (4) in der unteren Stellung (C) befindet und die darauf gestapelten Platten (1, 5) auf den zweiten Stapeltisch (12) überführt wurden.

6. Vorrichtung zum Stapeln von Platten nach Anspruch 5, dadurch **gekennzeichnet**, daß sich der erste Stapeltisch (4) mit seiner zurückgezogenen Stapelplatte in eine Stellung (E) nach oben bewegt, in der die Stapelplatte (6) ausgefahren ist, um die Bereitschaftsstellung (A) einzunehmen.

7. Vorrichtung zum Stapeln von Platten nach einem der vorhergehenden Ansprüche, dadurch **gekennzeichnet**, daß die Plattenabwerfmittel (3) eine Einrichtung aufweisen, um den Abwerfwinkel der Platten (1, 5) einzustellen.

8. Vorrichtung zum Stapeln von Platten nach Anspruch 7, dadurch **gekennzeichnet**, daß die Plattenabwerfwinkel-Einstelleinrichtung eine obere Walze (7) und eine untere Walze (7) aufweist, die verdrehbar sind und die besagte Platte (1, 5) in einem Spalt dazwischen aufnehmen, um diese Platte (1, 5) abzuwerfen.

9. Vorrichtung zum Stapeln von Platten nach Anspruch 8, dadurch **gekennzeichnet**, daß zumindest eine der Walzen (7) angetrieben ist.

10. Vorrichtung zum Stapeln von Platten nach Anspruch 8 oder 9, dadurch **gekennzeichnet**, daß die Lage einer der Walzen (7) in Bezug auf die Fallinie der Platten nach vorne oder nach hinten veränderbar ist.

11. Vorrichtung zum Stapeln von Platten nach einem der vorhergehenden Ansprüche, dadurch **gekennzeichnet**, daß sie eine Prallwand (9) umfaßt, die getrennt von dem ersten Stapeltisch (4) und in der Fallinie der von den Plattenabwerfmitteln (3) abgeworfenen Platten (1, 5) angeordnet ist, damit die Platten (1, 5) nicht nach außen vorstehen.

12. Vorrichtung zum Stapeln von Platten nach Anspruch 11, dadurch **gekennzeichnet**, daß die Prallwand (9) zumindest längs der Fallinie der von den Abwerfmitteln (3) abgeworfenen Platten (1, 5) von oben nach unten ausgebildet ist und daß sich die Prallwand (9) mit einer Seite eines auf dem ersten Stapeltisch (4) gebildeten Plattenstapels (8) in ständiger Berührung befindet.

13. Vorrichtung zum Stapeln von Platten nach Anspruch 12, dadurch **gekennzeichnet**, daß sie ferner Ausrichtmittel (10, 11) umfaßt, um die gestapelten Platten (1, 5) auszurichten, indem zumindest ein Teil mindestens einer Seite des Plattenstapels (8) in horizontaler Richtung wiederholt verschoben wird.

14. Vorrichtung zum Stapeln von Platten nach Anspruch 13, dadurch **gekennzeichnet**, daß obere Bereiche von die Ausrichtmittel (10, 11) umfassenden Einrichtungen (10) gegenüber dem ersten Stapeltisch (4) nach außen erweitert sind.

15. Verfahren zum Stapeln von pastierten Platten, die von einem Bandförderer (2) kontinuierlich zugeführt und von an einem vorderen Ende des Förderers (2) angeordneten Abwerfmitteln (3) von dem Förderer ( 2) abgeworfen werden, wobei die Platten auf einen ersten Stapeltisch (4) einer Stapeleinrichtung fallen, um darauf einen Plattenstapel (8) zu bilden, dadurch **gekennzeichnet**, daß es die Schritte umfaßt: Steuern des Stapeltisches (4) zu einer Abwärtsbewegung entsprechend der Anzahl der darauf gestapelten Platten (1, 5), und wenn dieser Stapeltisch (4) eine Bereitschaftsstellung (A) über oder neben einer Fallinie der Platten (1, 5) einnimmt, Steuern dieses Tisches (4) zum Bewegen in eine Stellung (B) unter der Fallinie der Platten (1, 5) in einem Zeitintervall zwischen dem Auswerfen der Platten, damit die Platten (1, 5) darauf gestapelt werden können.

16. Vorrichtung zum Stapeln von Platten nach Anspruch 15, dadurch **gekennzeichnet**, daß die Stapeleinrichtung einen unter dem ersten Stapeltisch (4) angeordneten zweiten Stapeltisch (12) aufweist, wobei die von den Plattenabwerfmitteln (3) von dem Förderer (2) abgeworfen Platten (1, 5) auf den zweiten Stapeltisch (12) fallen, bis der erste Stapeltisch gesteuert wird, um sich von der Bereitschaftsstellung (A) in die Stellung (B) unter der Fallinie der Platten (1, 5) zu bewegen, damit die Platten (1, 5) auf diesem gestapelt werden können.

17. Verfahren nach Anspruch 16, dadurch **gekennzeichnet**, daß der erste Stapeltisch (4), nachdem er sich in die Stellung (B) unter der Fallinie der Platten (1, 5) bewegt hat, gesteuert wird, um sich in eine untere Stellung (C) nach unten zu bewegen, während die Platten (1, 5) weiterhin darauf gestapelt werden, und daß die auf den ersten Stapeltisch (4) gestapelten Platten (1, 5) in dieser unteren Stellung (C) auf den zweiten Stapeltisch (12) überführt werden.

18. Verfahren nach Anspruch 17, dadurch **gekennzeichnet**, daß, während die Platten (1, 5) auf dem ersten Stapeltisch (4) gestapelt werden, der zweite Stapeltisch (12), auf dem ein Plattenstapel (8) gebildet wurde, gesteuert wird, damit er sich zum Ort eines Überführungsförderers (14) nach unten bewegt, um diesen Plattenstapel (8) auf den Förderer (14) zu überführen.

19. Verfahren nach Anspruch 17 oder 18, dadurch **gekennzeichnet**, daß eine Stapelplatte (6) des ersten Stapeltisches (4) von der Abwärtsbahn der auf dem zweiten Stapeltisch (12) gestapelten Platten (1, 5) in eine Stellung (D) zurückgezogen wird, wenn sich der erste Stapeltisch (4) in der unteren Stellung (C) befindet und wenn die darauf gestapelten Platten (1, 5) auf den zweiten Stapeltisch (12) überführt wurden.

20. Verfahren nach Anspruch 18, dadurch **gekennzeichnet**, daß der erste Stapeltisch (4), dessen Stapelplatte zurückgezogen ist, gesteuert wird, damit er sich in eine Stellung (E) nach oben bewegt, in der die Stapelplatte (6) ausgefahren wird, um die Bereitschaftsstellung (A) einzunehmen.

## Revendications

1. Dispositif d'empilage de plaques, comprenant : un transporteur à bande (2) pour transporter de façon continue une multiplicité de plaques empatées (1,5) ; un moyen disposé à une extrémité avant dudit transporteur (2) pour éjecter dudit transporteur (2) lesdites plaques (1,5) et les faire tomber sur une première table réceptrice (4) du dispositif d'empilage pour former une pile de plaques (8) sur cette table, caractérisé en ce que la première table réceptrice (4) descend suivant le nombre de plaques (1,5) empilées sur elle, et en ce que ladite première table réceptrice (4) peut occuper une position d'attente (A) au-dessus ou à côté de la ligne de chute des plaques (1,5), ladite table (4) pouvant se déplacer depuis la position d'attente (A) vers une position (B) au-dessous de la ligne de chute des plaques (1,5), dans les limites d'un intervalle de temps entre deux éjections de plaques, afin de permettre aux plaques (1,5) de s'empiler sur elle.

2. Dispositif d'empilage de plaques selon la revendication 1, caractérisé en ce qu'il comprend une seconde table réceptrice *(12)* disposée au-dessous de ladite première table réceptrice (4), les plaques (1,5) éjectées du transporteur (2) par le moyen (3) éjecteur de plaques tombant sur ladite seconde table réceptrice (12) jusqu'à ce que la première table réceptrice se déplace, à partir de la position d'attente (A), dans la position (B) au-dessous de la ligne de chute des plaques (1,5) afin de permettre aux plaques (1,5) de s'empiler sur elle.

3. Dispositif d'empilage de plaques selon la revendication 2, caractérisé en ce qu'après que la première table réceptrice (4) s'est déplacée dans la position (B) au-dessous de la ligne de chute des plaques (1,5), elle descend vers une position inférieure (C) tandis que des plaques (1,5) continuent à s'empiler sur elle et, dans ladite position inférieure (C), les plaques (1,5) empilées sur la première table (4) sont transférées sur la seconde table (12).

4. Dispositif d'empilage de plaques selon la revendication 3, caractérisé en ce que, tandis que des plaques (1,5) s'empilent sur la première table réceptrice (4), la seconde table réceptrice (12), sur laquelle une pile de plaques (8) a été formée, descend au niveau d'un tapis roulant de transfert (14) afin de transférer ladite pile de plaques (8) sur ledit tapis (14).

5. Dispositif d'empilage de plaques selon la revendication 3 ou 4, caractérisé en ce qu'une plaque d'empilage (6) de la première table réceptrice (4) est placée en retrait dans une position (D) hors de la trajectoire de descente de plaques (1,5) empilées sur la seconde table réceptrice (12), au moment où ladite première table réceptrice (4) est dans la position inférieure (C) et où les plaques (1,5) empilées sur elle ont été transférées sur la seconde table réceptrice (12).

6. Dispositif d'empilage de plaques selon la revendication 5, caractérisé en ce que la première table réceptrice (4) monte, avec sa plaque d'empilage en retrait, dans une position (B) dans laquelle la plaque d'empilage (6) est mise en saillie pour occuper la position d'attente (A).

7. Dispositif d'empilage de plaques selon l'une quelconque des revendications 1 à 6, caractérisé en ce que ledit moyen (3) éjecteur de plaques comporte un dispositif pour régler l'angle d'éjection desdites plaques (1,5).

8. Dispositif d'empilage de plaques selon la revendication '7, caractérisé en ce que ledit dispositif de réglage d'angle d'éjection des plaques comprend un rouleau supérieur ('7) et un rouleau inférieur ('7) qui tournent et saisissent lesdites plaques (1,5) dans un espace formé entre eux pour les éjecter.

9. Dispositif d'empilage de plaques selon la revendication 8, caractérisé en ce qu'une force d'entraînement est appliquée à l'un au moins des rouleaux (7)

10. Dispositif d'empilage de plaques selon la revendication 8 ou 9, caractérisé en ce que la position de l'un desdits rouleaux (7) peut être modifiée dans la direction avant et arrière par rapport à la ligne de chute des plaques.

11. Dispositif d'empilage de plaques selon l'une quelconque des revendications 1 à 10, caractérisé en ce qu'il comprend une paroi de collision (9) séparée de la première table réceptrice (4) et située dans la ligne de chute des plaques (1,5) éjectées du moyen (3) éjecteur de plaques, de façon à empêcher les plaques (1,5) de déborder à l'extérieur.

12. Dispositif d'empilage de plaques selon la revendication 11, caractérisé en ce que ladite paroi de collision (9) est formée entre des niveaux situés au moins au-dessus et au-dessous de la ligne de chute desdites plaques (1,5) éjectées dudit moyen (3) éjecteur de plaques, et en ce que ladite paroi de collision (9) est en contact continu avec un côté d'une pile de plaques (8) formée sur la première table réceptrice (4),

13. Dispositif d'empilage de plaques selon la revendication 12, caractérisé en ce qu'il comprend en outre un moyen de taquage (10,11) pour taquer lesdites plaques empilées (1,5) en poussant à répétition en direction horizontale au moins une partie d'un côté au moins de ladite pile de plaques (8).

14. Dispositif d'empilage de plaques selon la revendication 13 caractérisé en ce que des parties supérieures de dispositifs (10) comprenant ledit moyen de taquage (10,11) s'étendent à l'extérieur par rapport à ladite première table réceptrice (4).

15. Procédé d'empilage de plaques empâtées qui sont transportées de façon continue par un transporteur à bande (2) et éjectées dudit transporteur (2) par un moyen éjecteur (3) disposé à une extrémité avant dudit transporteur (2), lesdites plaques tombant sur une première table réceptrice (4) d'un dispositif d'empilage pour former une pile de plaques (8) sur celle-ci, caractérisé en ce qu'il comprend les étapes consistant à commander la table réceptrice (4) de sorte qu'elle descende suivant le nombre de plaques (1,5) empilées sur elle et, lorsque ladite table réceptrice (4) occupe une position d'attente (A) au-dessus ou à côté d'une ligne de chute des plaques (1,5), à commander ladite table (4), de sorte qu'elle se déplace dans une position (B) au-dessous de la ligne de chute des plaques (1,5), dans les limites d'un intervalle de temps entre deux éjections de plaques, afin de permettre aux plaques (1,5) de s'empiler sur elle.

16. Procédé selon la revendication 15, caractérisé en ce que le dispositif d'empilage comprend une seconde table réceptrice (12) disposée au-dessous de ladite première table réceptrice (4), les plaques (1,5) éjectées du transporteur (2) par le moyen (3) éjecteur de plaques tombant sur ladite seconde table réceptrice (12) jusqu'à ce que la première table réceptrice soit commandée de sorte qu'à partir de la position d'attente (A), elle se déplace dans la position (B) au-dessous de la ligne de chute des plaques (1,5) afin de permettre aux plaques (1,5) de s'empiler sur elle.

17. Procédé selon la revendication 16, caractérisé en ce qu'après que la première table réceptrice (4) s'est déplacée dans la position (B) au-dessous de la ligne de chute des plaques (1,5), elle est commandée de sorte qu'elle descende vers une position inférieure (C) tandis que des plaques (1,5) continuent à s'empiler sur elle et, dans ladite position inférieure (C), les plaques (1,5) empilées sur la première table (4) sont transférées sur la seconde table (12).

18. Procédé selon la revendication 17, caractérisé en ce que, tandis que des plaques (1,5) s'empilent sur la première table réceptrice (4), la seconde table réceptrice (12), sur laquelle une pile de plaques (8) a été formée, est commandée de sorte qu'elle descende au niveau d'un tapis roulant de transfert (14) afin de transférer ladite pile de plaques (8) sur ledit tapis (14).

19. Procédé selon la revendication 17 ou 18, caractérisé en ce qu'une plaque d'empilage (6) de la première table réceptrice (4) est placée en retrait dans une position (D) hors de la trajectoire de descente de plaques (1,5) empilées sur la seconde table réceptrice (12), au moment où ladite première table réceptrice (4) est dans la position inférieure (C) et où les plaques (1,5) empilées sur elle ont été transférées sur la seconde table réceptrice (12).

20. Procédé selon la revendication 18, caractérisé en ce que la première table réceptrice (4) est commandée de sorte qu'elle monte, avec sa plaque d'empilage en retrait, dans une position (E) dans laquelle la plaque d'empilage (6) est mise en saillie pour occuper la position d'attente (A).
